Europäisches Patentamt

European Patent Office

Office européen des brevets

(11) Veröffentlichungsnummer: **0 272 490**
**A1**

## (12) EUROPÄISCHE PATENTANMELDUNG

(21) Anmeldenummer: 87117418.1

(22) Anmeldetag: 25.11.87

(51) Int. Cl.4: **G06K 7/06**

(30) Priorität: 28.11.86 DE 8631861 U

(43) Veröffentlichungstag der Anmeldung:
29.06.88 Patentblatt 88/26

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Grassl, Erwin**
**Drygalski-Allee 111**
**D-8000 München 71(DE)**
Erfinder: **Hansbauer, Hermann, Ing. (grad)**
**Kaspar-Kerll-Strasse 22**
**D-8000 München 60(DE)**

(54) Chipkartenleser.

(57) Chipkartenleser mit in einem Aufnahmeteil (1) entgegen Federkraft verschiebbar gelagerten Schlitten (2), in dem eine Kontaktvorrichtung zum Kontaktieren eines auf der Karte befindlichen Chips vorgesehen ist, wobei diese Kontaktvorrichtung über einen mehradrigen Bandleiter (8) mit an den Außenkonturen der Aufnahme vorgesehenen Anschlußpunkten elektrisch verbunden ist.

Der Bandleiter (8) soll so ausgebildet sein, daß stets ein einwandfreier Betrieb des Chipkartenlesers gewährleistet ist.

Zu diesem Zweck ist der Bandleiter mehrfach ziehharmonikaartig gefaltet.

FIG 2

EP 0 272 490 A1

## Chipkartenleser

Die vorliegende Erfindung beinhaltet einen Chipkartenleser mit in einem Aufnahmeteil entgegen Federkraft verschiebbar gelagerten Schlitten, wobei in dem Schlitten eine Kontaktvorrichtung zum Kontaktieren eines auf der Karte befindlichen Chips vorgesehen ist und diese Kontaktvorrichtung über einen mehradrigen Bandleiter mit einem an den Außenkonturen der Aufnahme angeordneten Anschlußpunkt elektrisch verbunden ist.

Bei derartigen Kartenlesern wird die Chipkarte durch eine Öffnung im Aufnahmeteil in den Schlitten eingebracht. Durch Druck auf den entgegen Federkraft verschiebbaren Schlitten gelangt dieser in die Lesestellung, in der er beispielsweise durch eine Herzkurvensteuerung gehalten wird. Durch erneuten Druck auf die Chipkarte wird der Schlitten nach Beendigung des Lesevorganges durch die Federn in die Ausgangslage zurückgeführt. Dabei ist die im Schlitten angeordnete Kontaktvorrichtung über einen mehradrigen Bandleiter mit einem an den Außenkonturen des Aufnahmeteils vorgesehenen Anschlußpunkt verbunden.

Es hat sich nun gezeigt, daß dieser Bandleiter bei häufiger Benutzung des Chipkartenlesers hohen Knick-und Biegebelastungen ausgesetzt wird, so daß einzelne Leiter brechen und somit der Kartenleser nicht mehr einsatzfähig ist.

Es ist daher Aufgabe der Erfindung, eine elektrische Verbindung zwischen der Kontaktvorrichtung im Schlitten und dem Anschlußpunkt an dem Aufnahmeteil mittels eines Bandleiters zu schaffen, durch die stets ein einwandfreier Betrieb des Chipkartenlesers erreicht wird.

Diese Aufgabe wird dadurch gelöst, daß der Bandleiter innerhalb des Aufnahmeteils mehrfach ziehharmonikaartig gefaltet ist.

Durch eine derartige Gestaltung des Bandleiters können in einfacher Weise Knickbelastungen, die bei Betätigung des Schlittens insbesondere an den Anschlußstellen selbst auftreten, weitgehend vermieden werden. Durch die ziehharmonikaartige Faltung des Bandleiters läßt sich dieser unter einem kleinen Winkel an die Anschlußpunkte heranführen, so daß nur geringe Knickbewegungen auftreten können.

Die Erfindung soll im folgenden anhand eines Ausführungsbeispiels erläutert werden.

Es zeigt

FIG 1 eine Aufsicht auf den Chipkartenleser in dessen Ausgangszustand,

FIG 2 eine Aufsicht auf den Chipkartenleser in dessen Leselage.

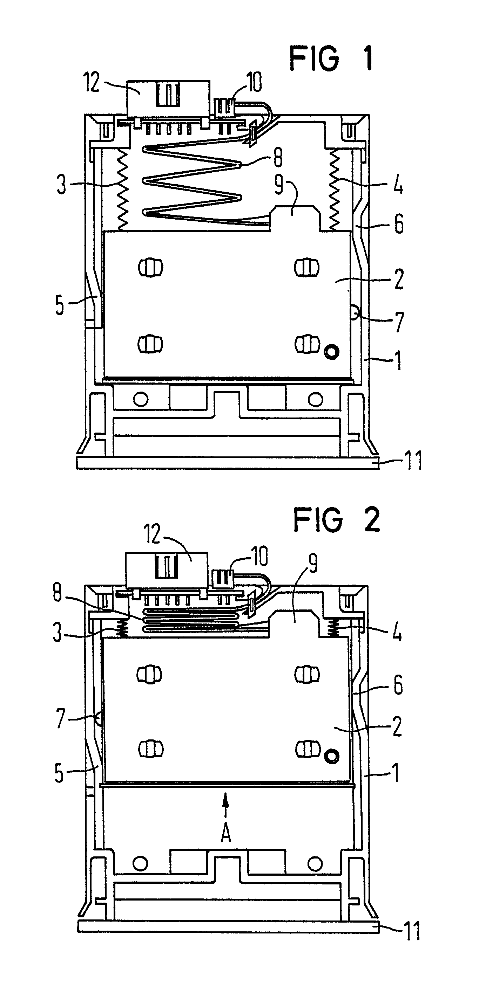

Der in den Figuren dargestellte Chipkartenleser besteht im wesentlichen aus dem Aufnahmeteil 1 und dem in diesem Aufnahmeteil längs verschiebbar geführten Schlitten 2. Der Schlitten 2 wird beim Einführen einer Chipkarte in die Aufnahmeöffnung 11 des Teils 1 entgegen der Kraft von zwei Federn 3 und 4 in die Leselage bewegt (FIG 2) und in dieser Lage z. B. mittels einer Herzkurvensteuerung gehalten. Durch erneuten Druck auf den Schlitten (Pfeilrichtung A) wird der Schlitten 2 entriegelt und durch die Federn 3 und 4 in seine Ausgangslage zurückgeführt.

Der Schlitten 2 enthält die zum Abtasten der Chipkarte erforderlichen, hier nicht näher dargestellten Kontaktfedern, die über am Aufnahmeteil vorgesehenen Steuerflächen 5 und 6 sowie einen im Schlitten 2 angeordneten Schieber 7 betätigt werden. Die elektrische Verbindung dieser im Schlitten 2 angeordneten Kontaktvorrichtung mit einer in einem Kommunikationsendgerät angeordneten Leseeinrichtung erfolgt über einen mehradrigen Bandleiter 8, der an den Anschlußpunkten 9 und 10 elektrisch und mechanisch befestigt ist. Dieser Bandleiter 8 ist ziehhar monikaartig innerhalb des Aufnahmeteils gefaltet. Im Bereich des Anschlußpunktes 10 ist der Bandleiter 8 durch einen Schlitz in dem Aufnahmeteil 1 geführt und mittels eines in den Schlitz eindrückbaren Keils 13 zuggesichert. Mit 12 ist eine mehradrige Steckaufnahme bezeichnet, die zur elektrischen Anschaltung des Chipkartenlesers innerhalb eines entsprechenden Kommunikationsendgerätes dient.

## Ansprüche

Chipkartenleser mit in einem Aufnahmeteil (1) entgegen Federkraft verschiebbar gelagerten Schlitten (2), wobei in dem Schlitten (2) eine Kontaktvorrichtung zum Kontaktieren eines auf der Karte befindlichen Chips vorgesehen ist und diese Kontaktvorrichtung über einen mehradrigen Bandleiter (8) mit einem an den Außenkonturen der Aufnahme angeordneten Anschlußpunkt (10) elektrisch verbunden ist, **dadurch gekennzeichnet,** daß der Bandleiter (8) innerhalb des Aufnahmeteils (1) mehrfach ziehharmonikaartig gefaltet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 343 727 (SIEMENS AG) * Figuren 2,3; Seite 9, Zeilen 20-37 * --- | 1 | G 06 K 7/06 |
| Y | US-A-4 034 150 (BURNETT, III) * Figuren 1-4; Spalte 1, Zeile 6 - Spalte 2, Zeile 11 * --- | 1 | |
| A | DE-A-1 904 153 (SOUTHERN WEAVING CO.) * Figuren 2,5,6; Seite 1, Zeile 1 - Seite 3, Zeile 16 * ----- | 1 | |

RECHERCHIERTE
SACHGEBIETE (Int. Cl.4)

G 06 K
H 01 B

Der vorliegende Recherchenbericht wurde für alle Patentansprüche erstellt

| Recherchenort | Abschlußdatum der Recherche | Prüfer |
|---|---|---|
| DEN HAAG | 07-03-1988 | GYSEN L.A.D. |